# EUROPEAN PATENT SPECIFICATION

(11) **EP 3 881 999 B1**
(45) Date of publication and mention of the grant of the patent: **10.07.2024**
(21) Application number: 19883965.6
(22) Date of filing: 12.11.2019
(51) Int. Cl.: B29C 45/06, B29C 45/13, B29C 45/16, B29C 45/26, B29C 65/70, B29C 45/00

(54) **APPARATUS AND METHOD FOR MANUFACTURING INJECTION MOLDED ARTICLE, AND RESIN MOLDED ARTICLE**
VORRICHTUNG UND VERFAHREN ZUR HERSTELLUNG EINES SPRITZGEGOSSENEN ARTIKELS UND HARZFORMARTIKEL
APPAREIL ET PROCÉDÉ DE FABRICATION D'UN ARTICLE MOULÉ PAR INJECTION ET ARTICLE MOULÉ EN RÉSINE

(30) Priority: 14.11.2018 JP 2018213611
(43) Date of publication of application: 22.09.2021
(73) Proprietor: Mitsuba Corporation, Kiryu-shi Gunma 376-8555 (JP)
(72) Inventor: FUJIU, Masaru, Kiryu-shi, Gunma 376-8555 (JP); SATO, Mitsunori, Kiryu-shi, Gunma 376-8555 (JP); SHIROTA, Naoyuki, Kiryu-shi, Gunma 376-8555 (JP); HIRUNUMA, Takafumi, Kiryu-shi, Gunma 376-8555 (JP)
(74) Representative: Becker, Eberhard
(86) International application number: PCT/JP2019/044427
(87) International publication number: WO 2020/100920

(56) References cited:
- JP-A- 2012 131 146
- JP-A- 2016 117 221
- US-A- 5 413 743
- US-A1- 2017 348 883

## Description

### BACKGROUND

### Technical Field

The present invention relates to an apparatus and method for manufacturing an injection molded article attached to a door mirror or the like, and a resin molded article.

### Related Art

As an example of an injection molded article that is attached to a door mirror of a vehicle or the like, an injection molded article in which a lens and a housing are integrally molded is known. In the injection molded article, two members made of two kinds of resin materials are integrated. A gap is easily formed in a joint between the door mirror and the injection molded article, and if the gap is formed, a wind noise is generated during travel due to the gap, or light leaks from the gap in the joint between the door mirror and the injection molded article. In order to eliminate the wind noise and the light leakage, an elimination member such as a packing or the like is attached to the joint by retrofit on the surface of the lens of the injection molded article after the completion of injection molding.

Moreover, with regard to the apparatus and method for manufacturing an injection molded article, Patent literatures 1 and 2 discloses the structure and the manufacturing method of the injection molded article, and discloses that a turntable is pivoted and a plurality of treatments are simultaneously performed on the turntable, and members made of different materials are integrated.

### [Literature of related art]

### [Patent literature]

Patent literature 1: Japanese Patent Laid-Open No. 2016-117221 (see also US 2017/348883 A1)
Patent literature 2: Japanese Patent Laid-Open No. 2010-179511 US 5 413 743 A discloses a lamp assembly having a plastic housing and a plastic lens molded in a rotary transfer molding machine having upper and lower mateable housing dies and upper and lower mateable lens dies in which the housing and the lens are molded simultaneously. The machine is then indexed so that the upper housing die with the molded housing retained in it is mated with the lower lens die with the molded lens retained in it. These two dies are configured so that an annular seal bead cavity is formed at an interface of the dies. A seal bead is then molded to join the molded housing to the molded lens to provide the lamp assembly. The machine is then indexed again so that the upper housing die with the lamp assembly retained in it is mated with an overlay die and a decorative overlay is molded on the peripheral margin of the lens.

### SUMMARY

### [Problems to be Solved]

However, in the apparatus and method for manufacturing an injection molded article described in Patent literatures 1 and 2, although resin molding in which two members are integrated can be performed, the member for eliminating the wind noise and the light leakage cannot be attached inside the manufacturing apparatus.

Thus, an elimination member for preventing the wind noise and the light leakage such as the packing or the like is retrofitted to the injection molded article in a separate process. If the elimination member is retrofitted after the injection molding, there is a problem that material costs and assembly man-hours for retrofitting are required.

In addition, if an automatic assembly machine which automatically assembles the elimination member is used, investment becomes necessary, and man-hours required for retrofitting is increased even if the automatic assembly is performed. In addition, when the shape of the elimination member is complex, there is a problem that the automatic assembly itself is also difficult.

In addition, if the assembly of the elimination member is performed in a separate process after a secondary injection in which two members are joined, intermediate inventory is generated. Furthermore, the injection molded article after the secondary injection is finished is temporarily removed from the manufacturing apparatus, and thus there is a possibility that the adhesion of foreign matters caused by static electricity occurs, and there is a possibility that the variation in products caused by a rattle or the like during the assembly setting occurs.

The present invention is provided in the appended claims and aims to provide an apparatus and method for manufacturing an injection molded article, and a resin molded article, wherein the apparatus and method for manufacturing an injection molded article enable, in addition to integrated molding of two components, molding of a wind noise and light leakage elimination member without removing the molded article from molds.

### [Means to Solve Problems]

An aspect of the present invention is an apparatus for manufacturing an injection molded article which performs: a primary injection in which a resin is injected into molds to mold a first member and a second member; a secondary injection in which the molds of the first member and the second member molded by the primary injection I are moved to the same injection position and are clamped, and the resin is injected into the molds to integrate the first member and the second member; and a tertiary injection in which the resin is injected into the molds where the secondary injection is performed, and the resin is injected onto the outer peripheral surface of at least one of the first member and the second member accommodated in the molds. The apparatus for manufacturing an injection molded article has: a turntable which performs a reciprocating rotation; first, second, and third molds disposed on the turntable at predetermined intervals along the rotational direction of the turntable; fourth, fifth, and sixth molds for opening and clamping the first, second, and third molds; first, second, and third injection devices for injecting the resin into the clamped molds; and a controller for performing a first position control and a second position control on the turntable and performing a first injection control and a second injection control on the first, second, and third injection devices. Furthermore, when the controller configured to perform the first position control, the turntable rotates to a first rotational position in which the first mold and the fourth mold face each other, the second mold and the fifth mold face each other, and the third mold and the sixth mold face each other; and when the controller configured to perform the second position control, the turntable rotates to a second rotational position in which the first mold and the sixth mold face each other, the second mold and the fourth mold face each other, and the third mold and the fifth mold face each other. In addition, when the controller configured to perform the first injection control followed by the first position control, the primary injection is performed by the first injection device, the first member is molded in the first and fourth molds, the secondary injection and the tertiary injection are performed by the second injection device, the first member and the second member are integrated in the second and fifth molds, the resin is supplied to the outer peripheral portion of at least one of the first member and the second member which are integrated, the primary injection is performed by the third injection device, and the second member is molded in the third and sixth molds. In addition, when the controller configured to perform the second injection control followed by the second position control, the secondary injection and the tertiary injection are performed by the third injection device, the first member and the second member are integrated in the first and sixth molds, the resin is injected onto the outer peripheral surface of at least one of the first member and the second member which are integrated, the primary injection is performed by the first injection device, the first member is molded in the second and fourth molds, the primary injection is performed by the second injection device, and the second member is molded in the third and fifth molds. Furthermore, the second and third injection devices each include two injection ports, one of the two injection ports works as an injection port for the primary and secondary injections, and the other of the two injection ports works as an injection port for the tertiary injection.

In another aspect of the present invention, the first, second, and third molds are disposed at intervals of 120°along the rotational direction of the turntable, and the first rotational position and the second rotational position form an angle of 120° with respect to a rotational center of the turntable.

In another aspect of the present invention, the fourth, fifth, and sixth molds are controlled by the controller to perform the mold opening and the mold clamping separately from each other.

Another aspect of the present invention is a method for manufacturing an injection molded article in which the following injections are performed: a primary injection in which a resin is injected into molds to mold a first member and a second member; a secondary injection in which the molds of the first member and the second member molded by the primary injection are moved to the same injection position and are clamped, and the resin is injected into the molds to integrate the first member and the second member; and a tertiary injection in which the resin is injected into the molds where the secondary injection is performed, and the resin is injected onto the outer peripheral surface of at least one of the first member and the second member accommodated in the molds. In the method for manufacturing an injection molded article, an apparatus for manufacturing the injection molded article is prepared which has: a turntable that performs a reciprocating rotation; first, second, and third molds disposed on the turntable at predetermined intervals along the rotational direction of the turntable; fourth, fifth, and sixth molds for opening and clamping the first, second, and third molds; first, second, and third injection devices for injecting the resin into the clamped molds; and a controller for performing a first position control and a second position control on the turntable and performing a first injection control and a second injection control on the first, second, and third injection devices. Furthermore, when the controller configured to perform the first position control, the turntable rotates to a first rotational position in which the first mold and the fourth mold face each other, the second mold and the fifth mold face each other, and the third mold and the sixth mold face each other; when the controller configured to perform the second position control, the turntable rotates to a second rotational position in which the first mold and the sixth mold face each other, the second mold and the fourth mold face each other, and the third mold and the fifth mold face each other. Furthermore, when the controller configured to perform the first injection control followed by the first position control, the primary injection is performed by the first injection device, the first member is molded in the first and fourth molds, the secondary injection and the tertiary injection are performed by the second injection device, the first member and the second member are integrated in the second and fifth molds, the resin is supplied to the outer peripheral portion of at least one of the first member and the second member which are integrated, the primary injection is performed by the third injection device, and the second member is molded in the third and sixth molds. Furthermore, when the controller configured to perform the second injection control followed by the second position control, the secondary injection and the tertiary injection are performed by the third injection device, the first member and the second member are integrated in the first and sixth molds, the resin is injected onto the outer peripheral portion of at least one of the first member and the second member which are integrated, the primary injection is performed by the first injection device, the first member is molded in the second and fourth molds, the primary injection is performed by the second injection device, and the second member is molded in the third and fifth molds. Besides, the second and third injection devices each include two injection ports, and in the second and third injection devices, the resin is injected from one injection port of the two injection ports to perform the molding of the first and second members or the molding for integrating the first member and the second member during the primary and secondary injections, and the resin is injected from the other injection port of the two injection ports along the outer peripheral portion of either one of the first member and the second member during the tertiary injection.

In another aspect of the present invention, in the method for manufacturing an injection molded article, the first, second, and third molds are disposed at intervals of 120° along the rotational direction of the turntable, and the first rotational position and the second rotational position form an angle of 120° with respect to a rotational center of the turntable.

In another aspect of the present invention, after the molds are opened upon the completion of the tertiary injection in each of the first and second rotational positions, a finished product of the injection molded article is removed from the inside of the molds in each of the first and second rotational positions.

In another aspect of the present invention, the mold clamping and the mold opening of each of the fourth, fifth, and sixth molds in each of the first and second rotational positions are performed respectively and separately.

Another aspect of the present disclosure is a resin molded article which is formed by the method for manufacturing an injection molded article. The resin molded article has: the first member consisting of a non-translucent resin, the second member consisting of a translucent resin, and a third member consisting of a non-translucent resin. The third member is arranged along the outer peripheral portion of either one of the first member and the second member.

### [Effect]

According to the present invention, by one apparatus for manufacturing an injection molded article, it is possible to perform the integrated molding of two components and subsequently perform the molding of the wind noise and light leakage elimination member without removing the molded article from the molds. Accordingly, molding time can be shortened, and furthermore, the precision of the injection molding can be improved. In addition, the intermediate inventory can be eliminated because the molding of the wind noise and light leakage elimination member can also be simultaneously performed without the removal from the molds. Furthermore, processing costs can be reduced because personnel and man-hours can be reduced. In addition, the quality of products can be improved because the variation caused by the assembly of the products (injection molded article and resin molded article) can also be suppressed.

### BRIEF DESCRIPTION OF THE DRAWINGS

FIG. 1 is a schematic diagram showing the configuration of an apparatus for manufacturing an injection molded article in Embodiment 1 of the present invention.
FIG. 2 is a conceptual diagram showing the structure of an injection molding apparatus being an example of the apparatus for manufacturing an injection molded article shown in FIG. 1.
FIG. 3 is a plan view showing the structure of an injection molded article manufactured by the injection molding apparatus shown in FIG. 2.
FIG. 4(a) is a diagram showing an assembly procedure in a first rotational position in the method for manufacturing an injection molded article of the present invention, and FIG. 4(b) is a diagram showing an assembly procedure in a second rotational position in the method for manufacturing an injection molded article of the present invention.
FIG. 5(a) is a conceptual diagram showing the disposing positions of first, second, and third molds of the apparatus for manufacturing an injection molded article shown in FIG. 1, and FIG. 5(b) is a conceptual diagram showing the disposing positions of fourth, fifth, and sixth molds of the apparatus for manufacturing an injection molded article shown in FIG. 1.
FIGS. 6(a), (b), and (c) are conceptual diagrams showing an injection molding process in the first rotational position.
FIGS. 7(a), (b), and (c) are conceptual diagrams showing an injection molding process in the second rotational position.
FIG. 8 is a perspective view showing the structure of a lens formed in a lens molding process in the method for manufacturing an injection molded article shown in FIG. 4.
FIG. 9 is a perspective view showing the structure of a front surface side of a housing formed in a housing molding process in the method for manufacturing an injection molded article shown in FIG. 4.
FIG. 10 is a perspective view showing the structure of a back surface side of the housing shown in FIG. 9.
FIG. 11 is a perspective view showing the structure of a lens-housing molded article formed in a secondary molding process in the method for manufacturing an injection molded article shown in FIG. 4.
FIG. 12 is a perspective view showing the structure of the lens-housing molded article shown in FIG. 11 in which the housing is removed.
FIG. 13 is a perspective view showing the structure of an assembled article after an inner housing assembly process in the method for manufacturing an injection molded article shown in FIG. 4.
FIG. 14 is a perspective view showing the structure of an injection molded article in Embodiment 2 of the present invention.
FIG. 15 is a perspective view showing the internal structure of the injection molded article shown in FIG. 14.

### DESCRIPTION OF THE EMBODIMENTS

Hereinafter, embodiments of the present invention are described in detail using the drawings.

### (Embodiment 1)

An injection molding apparatus (apparatus for manufacturing an injection molded article) 30 of Embodiment 1 is a manufacturing apparatus for forming an injection molded article by: molding a first member and a second member by a primary injection; further performing a secondary injection in which the molds of the first member and the second member molded by the primary injection are moved to the same injection position and are clamped, and the first member and the second member are integrated in an abutted state; and performing a tertiary injection for injecting an elastomer, a resin, or the like onto the outer surface of the integrated molded article after the secondary injection. Besides, the first member and the second member are members consisting of the same resin material or resin materials different from each other.

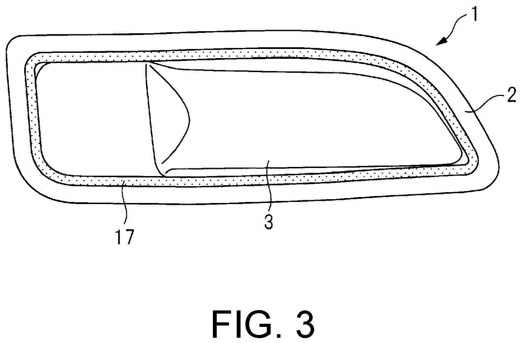

In Embodiment 1, a lamp 1 attached to a door mirror of a vehicle or the like as shown in FIG. 3 is described as an example of the injection molded article, a housing 2 is described as an example of the first member serving as a configuration member of the lamp 1, and a lens 3 is described as an example of the second member serving as a configuration member of the lamp 1. That is, the injection molded article of Embodiment 1 is the lamp 1 which is formed in a way that the housing 2 and the lens 3 are integrally molded. Moreover, the housing 2 comprises, for example, a non-translucent resin such as a polycarbonate resin or the like, and the lens 3 comprises, for example, a translucent resin such as an acrylic resin or the like.

In Embodiment 1, the primary injection means that the housing 2 or the lens 3 is injection-molded by any one of the molds of the injection molding apparatus 30. In addition, the secondary injection or the secondary molding means that a resin is injection-molded in a joint between the housing 2 and the lens 3 molded in the primary injection by any one of the molds of the injection molding apparatus 30, and the housing 2 and the lens 3 are integrated. Furthermore, the tertiary injection means that after the secondary injection, a resin for forming a wind noise and light leakage elimination member 17 shown in FIG. 3 is directly injected onto the outer surface of a molded article without removing the molded article inside the molds where the secondary injection is performed, and the injection molded article (the lamp 1 shown in FIG. 3) is formed.

Moreover, the wind noise and light leakage elimination member 17 is a resin-made member for preventing a light leakage and a wind noise generated during travel in the lamp 1 attached to the door mirror of the vehicle. The wind noise and light leakage elimination member 17 consists of, for example, a non-translucent resin such as the elastomer, the polycarbonate resin, or the like.

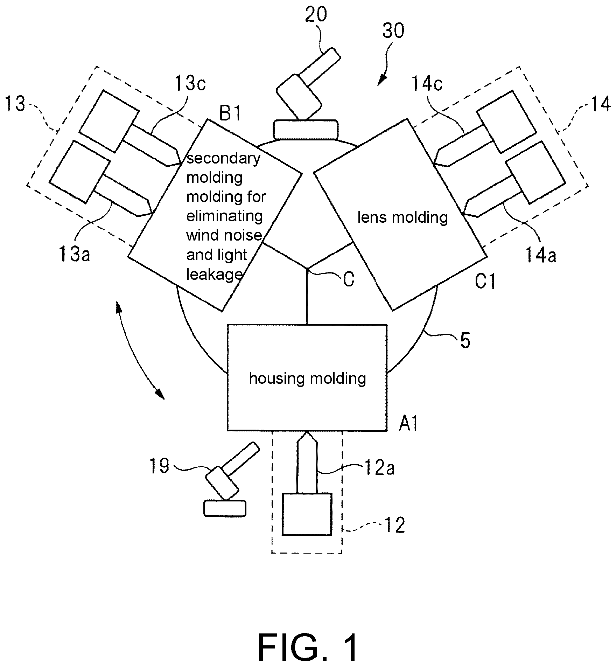

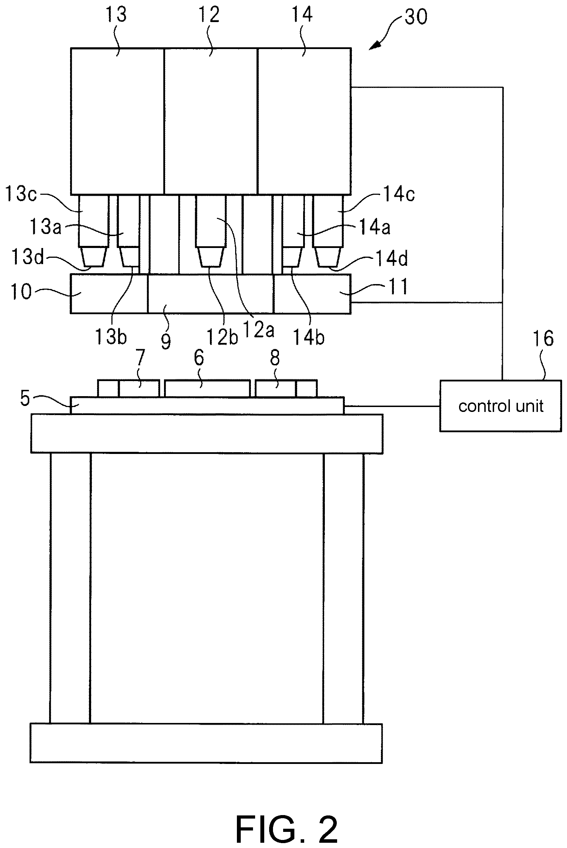

The injection molding apparatus (the apparatus for manufacturing an injection molded article) 30 of Embodiment 1 shown in FIGS. 1 and 2 is described. The injection molding apparatus 30 includes a turntable 5 that performs a reciprocating rotation between a first rotational position where an injection molding is performed and a second rotational position in which an injection molding is performed and which is located with the first rotational position at a predetermined angle with respect to a rotational center C. In Embodiment 1, a case in which the predetermined angle is 120° is described. That is, the first rotational position and the second rotational position form an angle of 120° with respect to the rotational center C of the turntable 5.

Furthermore, the injection molding apparatus 30 includes a first mold 6, a second mold 7, and a third mold 8 disposed on the turntable 5 at predetermined intervals along the rotational direction of the turntable 5. In Embodiment 1, a case is described in which the first mold 6, the second mold 7, and the third mold 8 disposed at an angle of 120° to each other with respect to the rotational center C on the turntable 5 are included. Besides, the injection molding apparatus 30 includes a fourth mold 9, a fifth mold 10, and a sixth mold 11 for opening and clamping the first mold 6, the second mold 7, and the third mold 8. In addition, the injection molding apparatus 30 includes: a first injection device 12, a second injection device 13, and a third injection device 14 for injecting the resin into the clamped molds, and a controller 16 for controlling: the rotation operation of the turntable 5; an operation of bringing/taking the fourth mold 9, the fifth mold 10, and the sixth mold 11 close to/away from any one of the first mold 6, the second mold 7, and the third mold 8 for mold opening and mold clamping; the injection device for use; the resin for use; the timing of injection; and the like. For example, the controller 16 configured to perform a first position control and a second position control on the turntable 5, and further perform a first injection control and a second injection control on the first injection device 12, the second injection device 13, and the third injection device 14.

Each of the first mold 6, the second mold 7, and the third mold 8 arranged on the turntable 5 is a lower mold. Among them, the first mold 6 and the second mold 7 are molds for molding the housing 2 and are female molds on a side where the injection-molded housing 2 remains inside the molds when the mold opening is performed. In addition, the third mold 8 is a mold for molding the lens 3 and is a male mold on a side where the injection-molded lens 3 deviates from the mold when the mold opening is performed.

Meanwhile, above the turntable 5, the fourth mold 9, the fifth mold 10, and the sixth mold 11 are arranged which are disposed corresponding to the stop position of each of the first mold 6, the second mold 7, and the third mold 8, and serve as an upper mold of each of the first mold 6, the second mold 7, and the third mold 8. Each of the fourth mold 9, the fifth mold 10, and the sixth mold 11 moves upward and downward to clamp and open each of the first mold 6, the second mold 7, and the third mold 8. That is, each of the fourth mold 9, the fifth mold 10, and the sixth mold 11 is arranged close to/away from each of the first mold 6, the second mold 7, and the third mold 8.

Moreover, the fourth mold 9 is a mold for molding the housing 2 and is a male mold on a side where the injection-molded housing 2 deviates from the mold when the mold opening is performed. Besides, the fifth mold 10 and the sixth mold 11 are molds for molding the lens 3 and are female molds on a side where the injection-molded lens 3 remains inside the molds when the mold opening is performed.

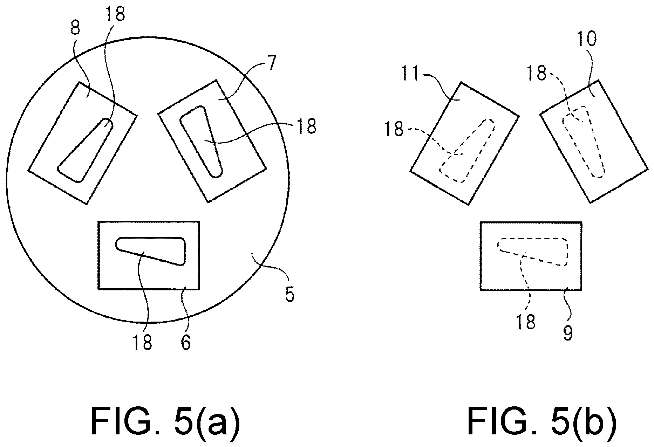

Besides, as shown in FIG. 5 described later, a cavity 18 corresponding to the shape of the molded article for performing the injection molding is formed in each of the first mold 6, the second mold 7, the third mold 8, the fourth mold 9, the fifth mold 10, and the sixth mold 11.

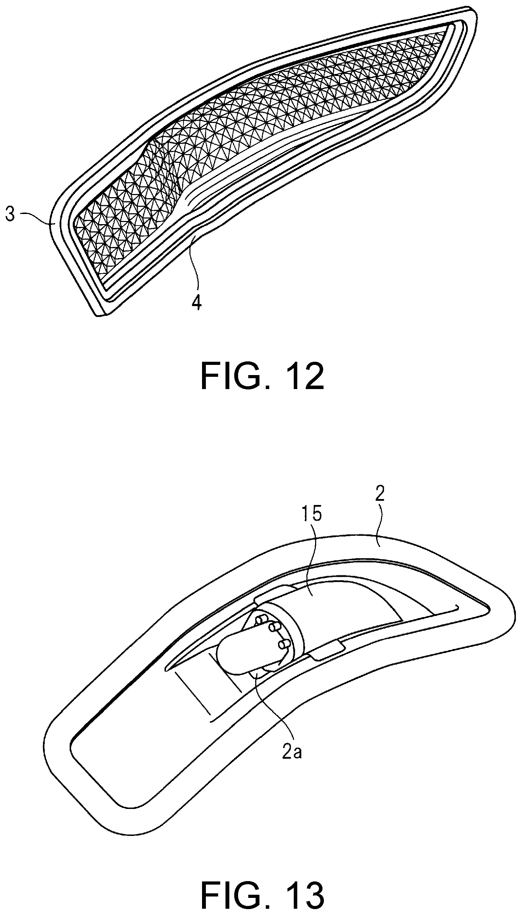

In addition, as shown in FIG. 2, in the injection molding apparatus 30, the first injection device 12 is attached to the fourth mold 9, the second injection device 13 is attached to the fifth mold 10, the third injection device 14 is attached to the sixth mold 11, and a necessary resin is respectively injected at a necessary timing by the control of the controller 16. Specifically, the first injection device 12 performs the primary injection for molding the housing 2. In addition, each of the second injection device 13 and the third injection device 14 performs: the primary injection for molding the lens 3; the secondary injection which injects a resin for integration (see FIG. 12 described later) 4 for integrating the housing 2 and the lens 3; and the tertiary injection which injects the resin for molding the wind noise and light leakage elimination member 17 in the molded article molded by the secondary injection.

Moreover, in the injection molding apparatus 30 of Embodiment 1, the first injection device 12 includes an injection tube 12a having an injection port 12b. Besides, the second injection device 13 and the third injection device 14 respectively include two injection ports. One of the two injection ports works as an injection port for the primary injection and the secondary injection. In addition, the other of the two injection ports works as an injection port for the tertiary injection in which the resin for molding the wind noise and light leakage elimination member 17 is injected along the outer peripheral portion of either one of the housing 2 and the lens 3 after the secondary injection.

Specifically, the second injection device 13 includes a first injection tube 13a having a first injection port 13b and a second injection tube 13c having a second injection port 13d. In the second injection device 13, for example, the first injection tube 13a is used for the primary injection and the secondary injection to inject the resin for the primary injection or the secondary injection from the first injection port 13b, and the second injection tube 13c is used for the tertiary injection to inject the resin for the tertiary injection and for molding the wind noise and light leakage elimination member 17 from the second injection port 13d.

In addition, the third injection device 14 includes a first injection tube 14a having a first injection port 14b and a second injection tube 14c having a second injection port 14d. In the third injection device 14, for example, the first injection tube 14a is used for the primary injection and the secondary injection to inject the resin for the primary injection or the secondary injection from the first injection port 14b, and the second injection tube 14c is used for the tertiary injection to inject the resin for the tertiary injection and for molding the wind noise and light leakage elimination member 17 from the second injection port 14d.

Besides, in the injection molding apparatus 30, the following controls are performed by the controller 16 shown in FIG. 2: the movement control (the first position control and the second position control) for the reciprocating rotation of the turntable 5 by 120°; the control of bringing/taking the fourth mold 9, the fifth mold 10, and the sixth mold 11 close to/away from the lower molds during the mold clamping and the mold opening; and the injection control (the first injection control and the second injection control) for the first injection device 12, the second injection device 13, and the third injection device 14.

Moreover, as shown in FIG. 1, robots for handling are disposed at appropriate intervals surrounding the turntable 5. For example, a first robot 19 and a second robot 20 are disposed in positions facing each other surrounding the turntable 5 and perform the carrying-in and removal of the treated article (molded article) in each mold.

Next, the lamp 1 which is the injection molded article shown in FIG. 3 is described. The lamp 1 is an injection molded article molded by the injection molding apparatus 30 of Embodiment 1 shown in FIGS. 1 and 2, and is a resin molded article integrally molded by two or more kinds of resins. Moreover, the lamp 1 mainly includes: the lens (second member) 3; the housing (first member) 2 having a hollow structure; and an enclosed member 15 such as a light bulb, a socket, and the like arranged inside. The housing 2 and the lens 3 consist of resins different from each other and are integrated by a resin for integration 4 shown in FIG. 12 described later. Furthermore, as shown in FIG. 3, the wind noise and light leakage elimination member (third member) 17 for preventing the wind noise, the light leakage, and the like is molded in the joint of the outer peripheral portion of the lens 3 with the housing 2. Moreover, the wind noise and light leakage elimination member 17 may be formed over the whole outer peripheral portion of the lens 3 or may be formed in a part of the outer peripheral portion. Furthermore, when the lamp 1 is attached to the door mirror, the wind noise and light leakage elimination member 17 may be arranged in a joint between the main body portion of the door mirror and the lens 3 in a way of not being exposed to the outside.

Next, the method for manufacturing an injection molded article of Embodiment 1 is described.

As shown in FIG. 5(a), on the turntable 5, each of the first mold 6, the second mold 7, and the third mold 8 is disposed at intervals of 120° with respect to the rotational center C shown in FIG. 1. In other words, each of the first mold 6, the second mold 7, and the third mold 8 is disposed at intervals of 120° along the rotational direction of the turntable 5. Meanwhile, as shown in FIG. 5(b), each of the fourth mold 9, the fifth mold 10, and the sixth mold 11 is disposed above the turntable 5 corresponding to the mold of each of the first mold 6, the second mold 7, and the third mold 8.

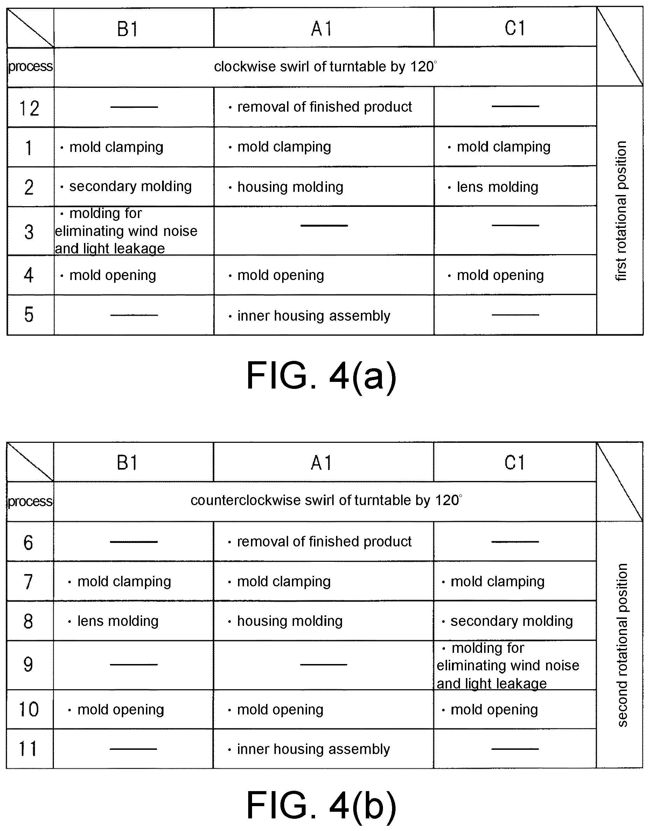

The method for manufacturing an injection molded article is described following the procedure of the injection molding shown in FIG. 4. Moreover, here, the manufacture procedure using FIGS. 4(a) and (b) is described starting from Process 1 shown in FIG. 4(a). However, it goes without saying that Process 1 is performed after Process 12 in the actual manufacture.

Firstly, the first rotational position and the second rotational position where the turntable 5 stops during the reciprocating rotation are described. The first rotational position and the second rotational position are positions in which the turntable 5 stops when performing reciprocating rotation (swirl) clockwise or counterclockwise, and have a positional relationship of forming an angle of 120° with respect to the rotational center C of the turntable 5 therebetween. For example, in the first rotational position, as shown in FIG. 1, desirable injection molding is performed in each of an A1 location, a B1 location, and a C1 location which are set at intervals of 120° with respect to the rotational center C.

In addition, in the second rotational position where the turntable 5 stops after rotating counterclockwise or clockwise by 120° from the first rotational position, the desirable injection molding is also performed in each of the A1 location, the B1 location, and the C1 location.

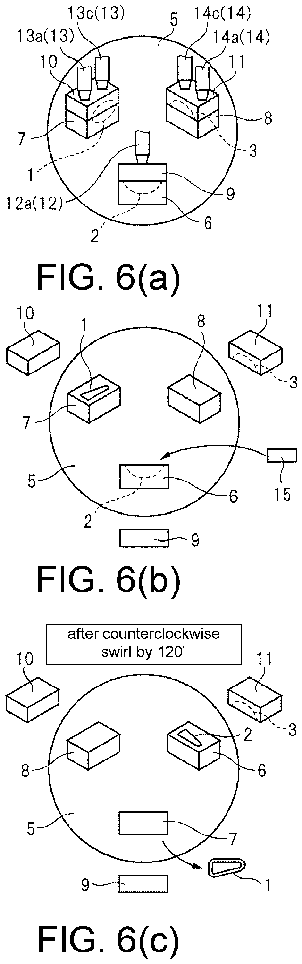

Firstly, a case in which the turntable 5 stops in the first rotational position is described. When the turntable 5 stops in the first rotational position, as shown in FIG. 6(a), the first mold 6 is disposed in a way of facing the fourth mold 9, the second mold 7 is disposed in a way of facing the fifth mold 10, and the third mold 8 is disposed in a way of facing the sixth mold 11. Besides, as shown in Process 1 of FIG. 4(a), in each of the locations A1, B1, and C1 of the first rotational position, the fourth mold 9, the fifth mold 10, and the sixth mold 11 serving as the upper mold of each mold move to perform the mold clamping (state of FIG. 6(a)).

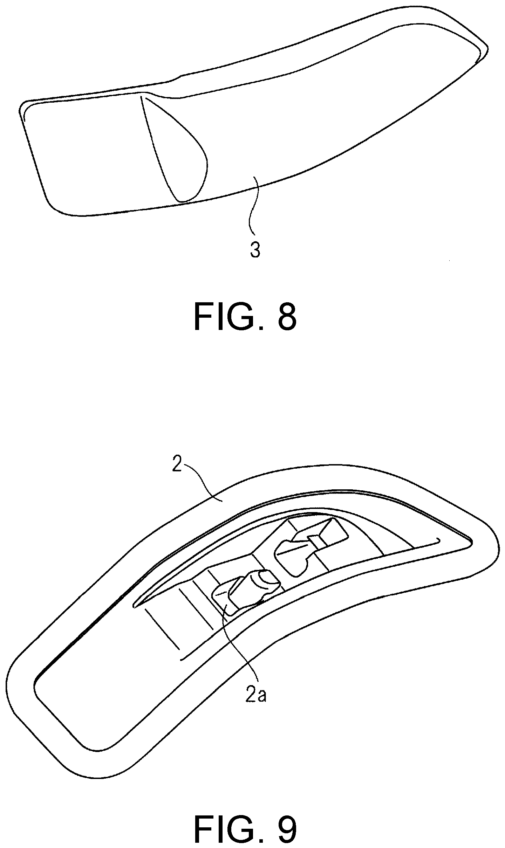

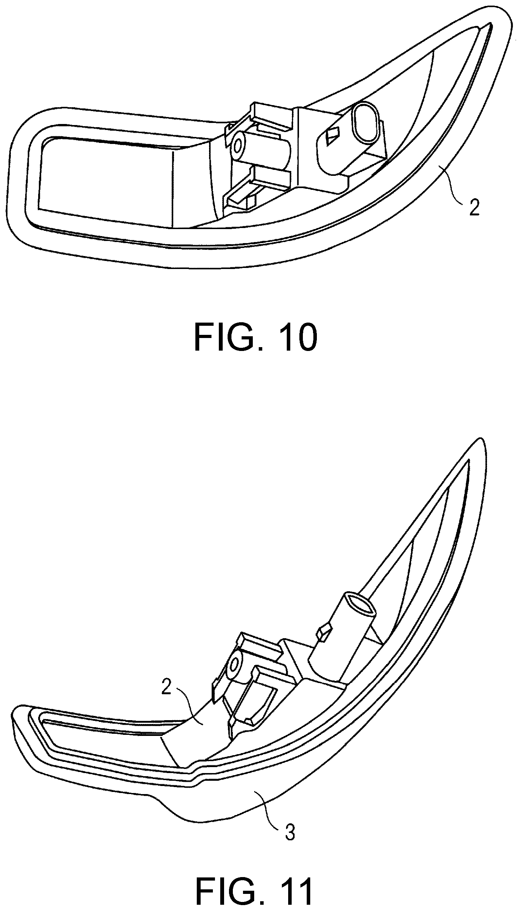

After the mold clamping, the first injection control is performed in Process 2 of FIG. 4(a). Specifically, in the A1 location of the first rotational position, the housing 2 serving as the first member is molded in the first mold 6 and the fourth mold 9 (housing molding). The injection for the housing 2 in this Process 2 is the primary injection performed by the first injection device 12. At this time, the resin for molding the housing 2 is injected from the injection port 12b of the injection tube 12a of the first injection device 12 shown in FIG. 2. FIGS. 9 and 10 show the structure of the housing 2 molded by the primary injection, and as shown in FIG. 9, the housing 2 includes a hollow portion 2a for mounting components.

In addition, in Process 2, in the C1 location of the first rotational position, the lens 3 serving as the second member shown in FIG. 8 is molded in the third mold 8 and the sixth mold 11 (lens molding). The injection for molding the lens 3 in this Process 2 is the primary injection performed by the third injection device 14. At this time, the resin for molding the lens 3 is injected from the first injection port 14b of the first injection tube 14a included in the third injection device 14. FIG. 8 shows the structure of the lens 3 molded by the primary injection. The lens 3 consists of the resin different from that in the housing 2.

Furthermore, in Process 2, in the B1 location of the first rotational position, the secondary injection by the second injection device 13 for integrating the housing 2 and the lens 3 molded by the primary injection is performed in the second mold 7 and the fifth mold 10. That is, a mold in which the housing 2 is molded and a mold in which the lens 3 is molded are moved to the same injection position (molding position) and are clamped, and the secondary injection for integrating the housing 2 and the lens 3 is performed in this state. At this time, the resin for integration (see FIG. 12) 4 for integrally molding the housing 2 and the lens 3 is injected from the first injection port 13b of the first injection tube 13a included in the second injection device 13. At this time, the resin for integration 4 is injected to an abutment portion between the housing 2 and the lens 3. FIG. 11 shows a molded article which is integrated (secondary-molded) by the secondary injection. That is, the molded article shown in FIG. 11 is a structural article which is obtained in a way that the lens 3 and the housing 2 are integrated via the resin for integration 4.

Moreover, in a series of operations performed by the injection molding apparatus 30, in the B1 location of Process 2 after the first-time Process 1 shown in FIG. 4(a), processes of the housing molding and the lens molding in the previous step have not been completed, and the housing 2 and the lens 3 have not yet been molded. Thus, the injection of the resin for integration 4 from the second injection device 13 for integrating the housing 2 and the lens 3 is not performed.

In addition, after the integrated molding (secondary molding) of the housing 2 and the lens 3, the tertiary injection is performed in the B1 location of Process 3 in FIG. 4(a) (the first injection control). In the tertiary injection (Process 3), molding for eliminating wind noise and light leakage is performed. Here, the resin for molding the wind noise and light leakage elimination member 17 is injected from the second injection port 13d of the second injection tube 13c included in the second injection device 13. At this time, as shown in FIG. 3, the resin for molding the wind noise and light leakage elimination member 17 is injected along the outer peripheral portion of the lens 3. Specifically, the resin for molding the wind noise and light leakage elimination member 17 is injected in a way of being joined to both the lens 3 and the housing 2 along the outer peripheral portion of the lens 3. Accordingly, the manufacture of the lamp (injection molded article) 1 shown in FIG. 3 is completed.

Moreover, the lamp 1 is integrally molded by at least two or more kinds of resins because the housing 2 and the lens 3 serving as the configuration members of the lamp 1 are members molded from different resins.

After the manufacture of the lamp 1 is completed, as shown in Process 4 of FIG. 4(a), in each of the locations A1, B1, and C1 of the first rotational position, the fourth mold 9, the fifth mold 10, and the sixth mold 11 serving as the upper mold of each mold move to perform the mold opening (state of FIG. 6(b)).

After the mold opening, in Process 5 of FIG. 4(a), an inner housing assembly is performed in the A1 location of the first rotational position. Here, by the handling of the first robot 19 shown in FIG. 1, as shown in FIG. 13, a light emitting diode (LED) or a socket with light bulb serving as the enclosed member 15 is disposed in the hollow portion 2a of the housing 2.

Next, the turntable 5 is swirled counterclockwise by 120° from the first rotational position and is stopped in the second rotational position (the first position control). That is, the turntable 5 is positioned in the second rotational position. When the turntable 5 is positioned in the second rotational position, as shown in FIG. 6(c), the first mold 6 is disposed in a way of facing the sixth mold 11, the second mold 7 is disposed in a way of facing the fourth mold 9, and the third mold 8 is disposed in a way of facing the fifth mold 10.

After the swirl of the turntable 5, in Process 6 of FIG. 4(b), a finished product is removed in the A1 location of the second rotational position. Here, the lamp 1 being the finished product shown in FIG. 3 is removed by the handling of the first robot 19 shown in FIG. 1.

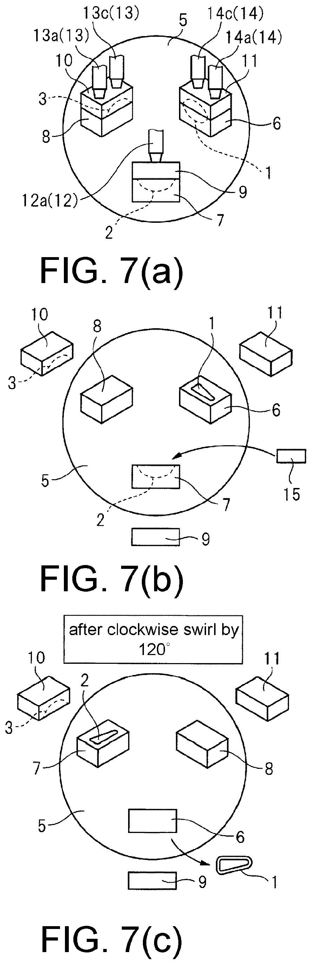

After the removal of the lamp 1, in Process 7 of FIG. 4(b), in each of the locations A1, B1, and C1 of the second rotational position, the fourth mold 9, the fifth mold 10, and the sixth mold 11 serving as the upper mold of each mold move to perform the mold clamping (state of FIG. 7(a)).

After the mold clamping, the second injection control is performed in Process 8 of FIG. 4(b). Specifically, in the A1 location of the second rotational position, the housing 2 serving as the first member is molded in the second mold 7 and the fourth mold 9 (the housing molding). The injection for the housing 2 in this Process 8 is the primary injection performed by the first injection device 12. At this time, the resin for molding the housing 2 shown in FIGS. 9 and 10 is injected from the injection port 12b of the injection tube 12a of the first injection device 12. As shown in FIG. 9, the housing 2 includes the hollow portion 2a for mounting components.

In addition, in Process 8, in the B1 location of the second rotational position, the lens 3 shown in FIG. 8 serving as the second member is molded in the third mold 8 and the fifth mold 10 (the lens molding). The injection for the lens 3 in this Process 8 is the primary injection performed by the second injection device 13. At this time, the resin for molding the lens 3 is injected from the first injection port 13b of the first injection tube 13a included in the second injection device 13.

Furthermore, in Process 8, in the C1 location of the second rotational position, the secondary injection (secondary molding) using the third injection device 14 for integrating the housing 2 and the lens 3 molded by the primary injection is performed in the first mold 6 and the sixth mold 11. At this time, the resin for integration (see FIG. 12) 4 for integrally molding the housing 2 and the lens 3 is injected from the first injection port 14b of the first injection tube 14a included in the third injection device 14. Specifically, the resin for integration 4 is injected to the abutment portion between the housing 2 and the lens 3. The molded article shown in FIG. 11 is a molded article integrated (secondary-molded) by the secondary injection and is a structural article which is obtained in a way that the lens 3 and the housing 2 are integrated via the resin for integration 4.

In addition, after the integrated molding (secondary molding) of the housing 2 and the lens 3, the tertiary injection is performed in the C1 location of Process 9 of FIG. 4(b) (the second injection control). In the tertiary injection (Process 9), the molding for eliminating wind noise and light leakage is performed. Here, the resin for molding the wind noise and light leakage elimination member 17 is injected from the second injection port 14d of the second injection tube 14c included in the third injection device 14. At this time, as shown in FIG. 3, the resin for molding the wind noise and light leakage elimination member 17 is injected along the outer peripheral portion of the lens 3. Specifically, the resin for molding the wind noise and light leakage elimination member 17 is injected in a way of being joined to both the lens 3 and the housing 2 along the outer peripheral portion of the lens 3. Accordingly, the manufacture of the lamp (injection molded article) 1 shown in FIG. 3 is completed.

After the manufacture of the lamp 1 is completed, as shown in Process 10 of FIG. 4(b), in each of the locations A1, B1, and C1 of the second rotational position, the fourth mold 9, the fifth mold 10, and the sixth mold 11 serving as the upper mold of each mold move to perform the mold opening (state of FIG. 7(b)).

After the mold opening, in Process 11 of FIG. 4(b), the inner housing assembly is performed in the A1 location of the second rotational position. Here, by the handling of the first robot 19 shown in FIG. 1, as shown in FIG. 13, the socket with light bulb serving as the enclosed member 15 is disposed in the hollow portion 2a of the housing 2.

Next, the turntable 5 is swirled clockwise by 120° from the second rotational position and is stopped (the second position control). That is, the turntable 5 is positioned in the first rotational position. When the turntable 5 is positioned in the first rotational position shown in FIG. 7(c), the first mold 6 is disposed in a way of facing the fourth mold 9, the second mold 7 is disposed in a way of facing the fifth mold 10, and the third mold 8 is disposed in a way of facing the sixth mold 11.

After the swirl of the turntable 5, in Process 12 of FIG. 4(a), the finished product is removed in the A1 location of the first rotational position. Here, the lamp 1 being the finished product shown in FIG. 3 is removed by the handling of the first robot 19 shown in FIG. 1.

According to the above, description has been made on one cycle of operation of the assembly of the lamp 1 in the first rotational position and the second rotational position of the turntable 5 in the injection molding apparatus 30 of Embodiment 1. In the actual assembly, the one cycle of operation performed by the injection molding apparatus 30 are repeated multiple times to perform the assembly.

According to the injection molding apparatus 30 and the method for manufacturing an injection molded article of Embodiment 1, by one injection molding apparatus 30, it is possible to perform the integrated molding of two components (the housing 2 and the lens 3 in Embodiment 1) and subsequently perform the molding of the wind noise and light leakage elimination member 17 without removing the molded article from the molds.

That is, two of the three injection devices respectively include two injection tubes, and thereby it is possible to integrally mold the housing 2 and the lens 3, and then subsequently mold the wind noise and light leakage elimination member 17 without removing the molded article from the molds. Accordingly, the molding time for the injection molding for molding the wind noise and light leakage elimination member 17 can be shortened. Furthermore, after the integrated molding of the housing 2 and the lens 3, the injection molding of the wind noise and light leakage elimination member 17 is performed without removing the molded article from the molds, and thus the precision of the injection molding in the lamp formation performed by the injection molding apparatus 30 can be improved.

For example, when the assembly of the elimination member is performed in a separate process after the secondary injection for joining (integrally molding) two members, the molded article after the secondary injection is temporally removed from the molds of the manufacturing apparatus, and thus the variation in products caused by a rattle or the like during the assembly setting occurs. However, in the injection molding apparatus 30 of Embodiment 1, the injection molding of the wind noise and light leakage elimination member 17 is performed without opening the molds after the integrated molding of the housing 2 and the lens 3, and thus the precision of injection molding can be improved.

In addition, during the molding of the wind noise and light leakage elimination member 17, the molding by the resin injection for the wind noise and light leakage elimination member 17 can also be subsequently performed without removing the molded article from the molds, and thus intermediate inventory can be eliminated.

Furthermore, in addition to the integrated molding of the housing 2 and the lens 3, the molding by the resin injection for the wind noise and light leakage elimination member 17 is performed subsequently without removing the molded article from the molds, and thus the molding of the wind noise and light leakage elimination member 17 is not implemented in a separate process, and personnel of workers and man-hours can be reduced. Accordingly, processing costs can be reduced.

In addition, after the integrated molding of the housing 2 and the lens 3 is performed, the molding of the wind noise and light leakage elimination member 17 is performed subsequently without removing the molded article from the molds, and thus the variation caused by the assembly of products (injection molded article and resin molded article) can also be suppressed, and the quality of products can be improved.

### (Embodiment 2)

In Embodiment 2, a case is described in which in the injection molded article (resin molded article) manufactured by the injection molding apparatus shown in FIG. 2, one of the enclosed members assembled inside the injection molded article is a light guide member (light guide lens).

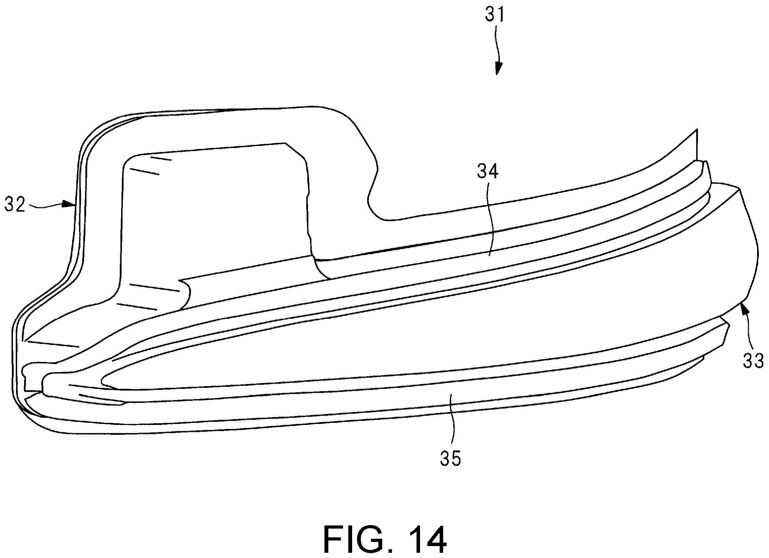

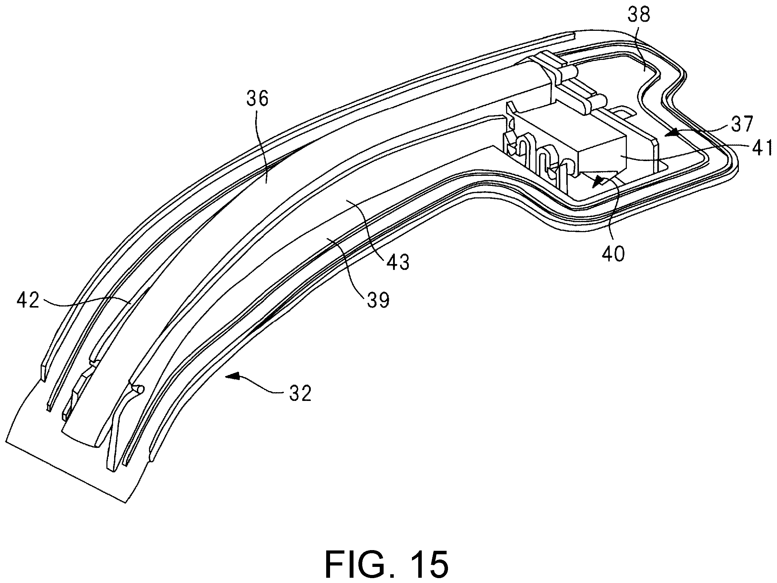

The structure of a lamp 31 being an example of the injection molded article shown in FIG. 14 is described. The lamp 31 is a resin molded article molded by two or more kinds of resins. The lamp 31 mainly includes: a housing (first member) 32 including an accommodation unit 40 shown in FIG. 15; a lens (second member) 33 covering the housing 32; and an enclosed member such as a light guide member 36 or the like enclosed inside. The housing 32 and the lens 33 consist of resins different from each other and are joined by resins for joining. Furthermore, seal members (third members) 34 and 35 for preventing the wind noise during the travel of the vehicle, the light leakage, and the like are molded in the joint of the outer peripheral portion of the lens 33 with the housing 32. Moreover, the seal members 34 and 35 may be formed over the whole outer peripheral portion of the lens 33 or may be formed in a part of the outer peripheral portion. Furthermore, when the lamp 31 is attached to the door mirror, the seal members 34 and 35 may be arranged in the joint between the main body portion of the door mirror and the lens 33 in a way of not being exposed to the outside.

Next, the internal structure of the lamp 31 is described using FIG. 15. The light guide member 36 guiding the light, a substrate 37 interposed between the housing 32 and the light guide member 36, and a semiconductor light emitting element (LED: light emitting diode, not shown) fixed to the substrate 37 are arranged inside the lamp 31. The substrate 37 is molded in a plate shape by an insulation material, and a part of the substrate 37 is disposed outside the accommodation unit 40.

The housing 32 consists of, for example, a non-translucent resin such as the polycarbonate resin or the like, and includes a plate unit 38 and a support unit 39 continuously arranged on the plate unit 38. The support unit 39 is curved. The accommodation unit 40 is arranged on the plate unit 38. The accommodation unit 40 is a recessed unit, and the substrate 37 is disposed in the accommodation unit 40.

Two ribs 42 and 43 are arranged along the longitudinal direction of the support unit 39. The rib 42 and the rib 43 are parallel to each other. End portions of the ribs 42 and 43 in the longitudinal direction are disposed in the accommodation unit 40. The ribs 42 and 43 protrude from the surface of the support unit 39. The light guide member 36 is disposed between the rib 42 and the rib 43.

In addition, the light guide member 36 is molded in a tubular shape by a synthetic resin, for example, the acrylic resin, and guides the light generated by the semiconductor light emitting element toward the lens 33. Furthermore, the light guide member 36 is disposed in a way of protruding in a predetermined direction from the surface of the substrate 37 and being curved. A frame 41 is arranged on an end portion which is closer to the substrate 37 among two end portions of the light guide member 36 in the longitudinal direction. The frame 41 is disposed over the inside and outside of the accommodation unit 40, and the substrate 37 is attached to the frame 41 in the accommodation unit 40.

The lens 33 shown in FIG. 14 consists of, for example, a translucent resin such as the acrylic resin or the like, and the outer peripheral edge of the lens 33 is joined to the housing 32.

Furthermore, the seal members 34 and 35 sealing a space between the lens 33 and a cover are arranged in a state in which a mirror device (not shown) is assembled, and these seal members 34 and 35 are molded in a belt shape by rubber-like elastic bodies. The seal members 34 and 35 consist of, for example, non-translucent resins such as the elastomers or the polycarbonate resins.

In the lamp 31 of Embodiment 2, the light leakage and the wind noise generated during the travel of the vehicle can also be prevented by arranging the seal members 34 and 35 along the outer peripheral portion of the lens 33.

It goes without saying that the present invention is not limited to the embodiments, and various modifications can be performed without departing from the scope of the invention defined by the appended claims. For example, in Embodiment 1, a case is described in which the mold opening and the mold clamping by the molds (upper molds) are simultaneously performed by the controller 16, but the fourth mold 9, the fifth mold 10, and the sixth mold 11 serving as the upper molds may be controlled by the controller 16 to perform the mold opening and the mold clamping separately from each other. For example, when the rotational position of the turntable 5 is in each of the first rotational position and the second rotational position, the mold clamping and the mold opening of each of the fourth mold 9, the fifth mold 10, and the sixth mold 11 may be controlled by the controller 16 to be performed respectively and separately.

In addition, in Embodiment 1, the procedure is described in which the finished product of the injection molded article (the lamp 1) is removed from the molds after the turntable 5 is swirled by 120° after the inner housing assembly. However, the finished product may be removed from the molds in each of the first rotational position and the second rotational position immediately after the mold opening is performed upon the completion of the tertiary injection (upon the molding of the wind noise and light leakage elimination member 17) in the molds in each of the first rotational position and the second rotational position of the turntable 5, that is, in the same process as the inner housing assembly process.

In addition, in Embodiment 1, a case is described in which the angle formed by the first rotational position and the second rotational position and the disposing intervals (the angles with respect to the rotational center C) of the first mold 6, the second mold 7, and the third mold 8 are respectively 120°, but these angles are not limited to 120° and may be angles other than 120°.

In addition, in Embodiment 1, a case is described in which the second injection device 13 and the third injection device 14 respectively include two injection tubes in the injection molding apparatus 30, but the first injection device 12 may also be equipped with two injection tubes.

### [Reference Signs List]

- 1: lamp (injection molded article, resin molded article)
- 2: housing (first member)
- 2a: hollow portion
- 3: lens (second member)
- 4: resin for integration
- 5: turntable
- 6: first mold
- 7: second mold
- 8: third mold
- 9: fourth mold
- 10: fifth mold
- 11: sixth mold
- 12: first injection device
- 12a: injection tube
- 12b: injection port
- 13: second injection device
- 13a: first injection tube
- 13b: first injection port
- 13c: second injection tube
- 13d: second injection port
- 14: third injection device
- 14a: first injection tube
- 14b: first injection port
- 14c: second injection tube
- 14d: second injection port
- 15: enclosed member
- 16: controller
- 17: wind noise and light leakage elimination member (third member)
- 18: cavity
- 19: first robot
- 20: second robot
- 30: injection molding apparatus
- 31: lamp (injection molded article, resin molded article)
- 32: housing (first member)
- 33: lens (second member)
- 34, 35: seal member (third member)
- 36: light guide member
- 37: substrate
- 38: plate unit
- 39: support unit
- 40: accommodation unit
- 41: frame
- 42, 43: rib

## Claims

1. An apparatus for manufacturing an injection molded article (1), configured to perform:
a primary injection in which a resin is injected into molds to mold a first member (32) and a second member (33);
a secondary injection in which the molds of the first member(32) and the second member (33) molded by the primary injection are moved to the same injection position and are clamped, and the resin is injected into the molds to integrate the first member (32) and the second member (33); and
a tertiary injection in which the resin is injected into the molds where the secondary injection is performed, and the resin is injected onto an outer peripheral surface of at least one of the first member (32) and the second member (33) accommodated in the molds;
the apparatus for manufacturing an injection molded article (1) comprising:
a turntable (5) configured to perform a reciprocating rotation;
a first mold (6), a second mold (7), and a third mold (8) disposed on the turntable (5) at predetermined intervals along the rotational direction of the turntable (5);
a fourth mold (9), a fifth mold (10), and a sixth mold (11) for opening and clamping the first mold (6), the second mold (7), and the third mold (8);
a first injection device (12), a second injection device (13), and a third injection device (14) for injecting the resin into the clamped molds; and
a controller (16), configured to perform a first position control and a second position control on the turntable (5), and perform a first injection control and a second injection control on the first injection device (12), the second injection device (13), and the third injection device (14); wherein
when the controller (16) configured to perform the first position control, the turntable (5) rotates to a first rotational position in which the first mold (6) and the fourth mold (9) face each other, the second mold (7) and the fifth mold (10) face each other, and the third mold (8) and the sixth mold (11) face each other;
when the controller (16) configured to perform the second position control, the turntable (5) rotates to a second rotational position in which the first mold (6) and the sixth mold (11) face each other, the second mold (7) and the fourth mold (9) face each other, and the third mold (8) and the fifth mold (10) face each other;
wherein when the controller (16) configured to perform the first injection control followed by the first position control, the primary injection is performed by the first injection device (12), the first member (32) is molded in the first mold (6) and the fourth mold (9), the secondary injection and the tertiary injection are performed by the second injection device (13), the first member (32) and the second member (33) are integrated in the second mold (7) and the fifth mold (10), the resin is supplied to the outer peripheral portion of at least one of the first member (32) and the second member (33) which are integrated, the primary injection is performed by the third injection device (14), and the second member (33) is molded in the third mold (8) and the sixth mold (11);
when the controller (16) configured to perform the second injection control followed by the second position control, the secondary injection and the tertiary injection are performed by the third injection device (14), the first member (32) and the second member (33) are integrated in the first mold (6) and the sixth mold (11), the resin is injected onto the outer peripheral surface of at least one of the first member (32) and the second member (33) which are integrated, the primary injection is performed by the first injection device (12), the first member (32) is molded in the second mold (7) and the fourth mold (9), the primary injection is performed by the second injection device (13), and the second member (33) is molded in the third mold (8) and the fifth mold (10); and
the second injection device (13) and the third injection device (14) each include two injection ports (13b, 13d, 14b, 14d),
one of the two injection ports (13b, 13d, 14b, 14d) is an injection port (13b, 14b) for the primary injection and the secondary injection, and the other of the two injection ports (13b, 13d, 14b, 14d) is an injection port (13d, 14d) for the tertiary injection.

2. The apparatus for manufacturing an injection molded article (1) according to claim 1, wherein
the first mold (6), the second mold (7), and the third mold (8) are disposed at intervals of 120° along the rotational direction of the turntable (5), and
the first rotational position and the second rotational position form an angle of 120° with respect to a rotational center (C) of the turntable (5).

3. The apparatus for manufacturing an injection molded article (1) according to claim 1 or 2, wherein
the fourth mold (9), the fifth mold (10), and the sixth mold (11) are controlled by the controller (16) to perform the mold opening and the mold clamping separately from each other.

4. A method for manufacturing an injection molded article (1), in which the following injections are performed:
a primary injection in which a resin is injected into molds to mold a first member (32) and a second member (33);
a secondary injection in which the molds of the first member (32) and the second member (33) molded by the primary injection are moved to the same injection position and are clamped, and the resin is injected into the molds to integrate the first member (32) and the second member (33); and
a tertiary injection in which the resin is injected into the molds where the secondary injection is performed, and the resin is injected onto an outer peripheral surface of at least one of the first member (32) and the second member (33) accommodated in the molds; wherein
an apparatus for manufacturing the injection molded article (1) is prepared which comprises:
a turntable (5) configured to perform a reciprocating rotation;
a first mold (6), a second mold (7), and a third mold (8) disposed on the turntable (5) at predetermined intervals along the rotational direction of the turntable (5);
a fourth mold (9), a fifth mold (10), and a sixth mold (11) for opening and clamping the first mold (6), the second mold (7), and the third mold (8);
a first injection device (12), a second injection device (13), and a third injection device (14) for injecting the resin into the clamped molds; and
a controller (16), configured to perform a first position control and a second position control on the turntable (5), and perform a first injection control and a second injection control on the first injection device (12), the second injection device (13), and the third injection device (14);
when the controller (16) configured to perform the first position control, the turntable (5) rotates to a first rotational position in which the first mold (6) and the fourth mold (9) face each other, the second mold (7) and the fifth mold (10) face each other, and the third mold (8) and the sixth mold (11) face each other;
when the controller (16) configured to perform the second position control, the turntable (5) rotates to a second rotational position in which the first mold (6) and the sixth mold (11) face each other, the second mold (7) and the fourth mold (9) face each other, and the third mold (8) and the fifth mold (10) face each other;
wherein when the controller (16) configured to perform the first injection control followed by the first position control, the primary injection is performed by the first injection device (12), the first member (32) is molded in the first mold (6) and the fourth mold (9), the secondary injection and the tertiary injection are performed by the second injection device (13), the first member (32) and the second member (33) are integrated in the second mold (7) and the fifth mold (10), the resin is supplied to the outer peripheral portion of at least one of the first member (32) and the second member (33) which are integrated, the primary injection is performed by the third injection device (14), and the second member (33) is molded in the third mold (8) and the sixth mold (11);
when the controller (16) configured to perform the second injection control followed by the second position control, the secondary injection and the tertiary injection are performed by the third injection device (14), the first member (32) and the second member (33) are integrated in the first mold (6) and the sixth mold (11), the resin is injected onto the outer peripheral portion of at least one of the first member (32) and the second member (33) which are integrated, the primary injection is performed by the first injection device (12), the first member (32) is molded in the second mold (7) and the fourth mold (9), the primary injection is performed by the second injection device (13), and the second member (33) is molded in the third mold (8) and the fifth mold (10); and
the second injection device (13) and the third injection device (14) each include two injection ports (13b, 13d, 14b, 14d), and in the second injection device (13) and the third injection device (14), the resin is injected from one injection port (13b, 14b) of the two injection ports (13b, 13d, 14b, 14d) to perform the molding of the first member (32) and the second member (33) or the molding for integrating the first member (32) and the second member (33) during the primary injection and the secondary injection, and the resin is injected from the other injection port (13d, 14d) of the two injection ports (13b, 13d, 14b, 14d) along the outer peripheral portion of either one of the first member (32) and the second member (33) during the tertiary injection.

5. The method for manufacturing an injection molded article (1) according to claim 4, wherein
the first mold (6), the second mold (7), and the third mold (8) are disposed at intervals of 120°along the rotational direction of the turntable (5), and
the first rotational position and the second rotational position form an angle of 120° with respect to a rotational center (C) of the turntable (5).

6. The method for manufacturing an injection molded article (1) according to claim 4 or 5, wherein
after the molds are opened upon the completion of the tertiary injection in each of the first rotational position and the second rotational position, a finished product of the injection molded article is removed from the inside of the molds in each of the first rotational position and the second rotational position.

7. The method for manufacturing an injection molded article (1) according to any one of claims 4 to 6, wherein
the mold clamping and the mold opening of each of the fourth mold (9), the fifth mold (10), and the sixth mold (11) in each of the first rotational position and the second rotational position are performed respectively and separately.

## Patentansprüche

1. Gerät zur Herstellung eines spritzgegossenen Gegenstandes (1), konfiguriert, um auszuführen:
eine Primäreinspritzung, bei der ein Harz in Formen eingespritzt wird, um ein erstes Element (32) und ein zweites Element (33) zu formen;
eine Sekundäreinspritzung, bei der die Formen des ersten Elements (32) und des zweiten Elements (33), die durch die Primäreinspritzung geformt wurden, in die gleiche Einspritzungsposition bewegt und geschlossen werden, und das Harz in die Formen eingespritzt wird, um das erste Element (32) und das zweite Element (33) zu integrieren; und
eine Tertiäreinspritzung, bei der das Harz in die Formen eingespritzt wird, in denen die Sekundäreinspritzung durchgeführt wird, und das Harz auf eine äußere Umfangsfläche mindestens einen des ersten Elements (32) und des zweiten Elements (33), die in den Formen aufgenommen sind, gespritzt wird;
wobei das Gerät zur Herstellung eines spritzgegossenen Gegenstandes (1) umfasst:
einen Drehtisch (5), konfiguriert, um eine hin- und hergehende Drehbewegung ausführen;
eine erste Form (6), eine zweite Form (7) und eine dritte Form (8), die auf dem Drehtisch (5) in vorgegebenen Abständen entlang der Drehrichtung des Drehtisches (5) angeordnet sind;
eine vierte Form (9), eine fünfte Form (10) und eine sechste Form (11) zum Öffnen und Schließen der ersten Form (6), der zweiten Form (7) und der dritten Form (8);
eine erste Einspritzungsvorrichtung (12), eine zweite Einspritzungsvorrichtung (13) und eine dritte Einspritzungsvorrichtung (14) zum Einspritzen des Harzes in die geschlossenen Formen; und
eine Steuerung (16), die so konfiguriert ist, dass sie eine erste Positionssteuerung und eine zweite Positionssteuerung an dem Drehtisch (5) durchführt und eine erste Einspritzsteuerung und eine zweite Einspritzsteuerung an der ersten Einspritzvorrichtung (12), der zweiten Einspritzvorrichtung (13) und der
dritten Einspritzvorrichtung (14) durchführt; wobei
wenn die Steuerung (16) so konfiguriert ist, dass sie die erste Positionssteuerung durchführt, der Drehtisch (5) sich in eine erste Drehposition dreht, in der die erste Form (6) und die vierte Form (9) einander zugewandt sind, die zweite Form (7) und die fünfte Form (10) einander zugewandt sind, und die dritte Form (8) und die sechste Form (11) einander zugewandt sind;
wenn die Steuerung (16) so konfiguriert ist, dass sie die zweite Positionssteuerung durchführt, der Drehtisch (5) sich in eine zweite Drehposition dreht, in der die erste Form (6) und die sechste Form (11) einander zugewandt sind, die zweite Form (7) und die vierte Form (9) einander zugewandt sind, und die dritte Form (8) und die fünfte Form (10) einander zugewandt sind;
wobei
wenn die Steuerung (16) so konfiguriert ist, dass sie die erste Einspritzungssteuerung gefolgt von der ersten Positionssteuerung durchführt, die Primäreinspritzung von der ersten Einspritzungsvorrichtung (12) durchgeführt wird, das erste Element (32) in der ersten Form (6) und der vierten Form (9) geformt wird, die Sekundäreinspritzung und die Tertiäreinspritzung von der zweiten Einspritzungsvorrichtung (13) durchgeführt werden, das erste Element (32) und das zweite Element (33) in der zweiten Form (7) und der fünften Form (10) integriert werden, das Harz dem äußeren Umfangsabschnitt wenigstens einen des ersten Elements (32) und des zweiten Elements (33), die integriert sind, zugeführt wird, die Primäreinspritzung von der dritten Einspritzungsvorrichtung (14) durchgeführt wird und das zweite Element (33) in der dritten Form (8) und der sechsten Form (11) geformt wird;
wenn die Steuerung (16) so konfiguriert ist, dass sie die zweite Einspritzsteuerung gefolgt von der zweiten Positionssteuerung durchführt, die Sekundäreinspritzung und die Tertiäreinspritzung von der dritten Einspritzvorrichtung (14) durchgeführt werden, das erste Element (32) und das zweite Element (33) in der ersten Form (6) und der sechsten Form (11) integriert werden, das Harz auf die äußere Umfangsfläche mindestens einem des ersten Elements (32) und des zweiten Elements (33), die integriert sind, gespritzt wird, die Primäreinspritzung durch die erste Einspritzungsvorrichtung (12) durchgeführt wird, das erste Element (32) in der zweiten Form (7) und der vierten Form (9) geformt wird, die Primäreinspritzung durch die zweite Einspritzungsvorrichtung (13) durchgeführt wird, und das zweite Element (33) in der dritten Form (8) und der fünften Form (10) geformt wird; und
die zweite Einspritzungsvorrichtung (13) und die dritte Einspritzungsvorrichtung (14) jeweils zwei Einspritzanschlüsse (13b, 13d, 14b, 14d) enthalten,
einer der beiden Einspritzanschlüsse (13b, 13d, 14b, 14d) ein Einspritzanschluss (13b, 14b) für die Primäreinspritzung und die Sekundäreinspritzung ist, und der andere der beiden Einspritzanschlüsse (13b, 13d, 14b, 14d) ein Einspritzanschluss (13d, 14d) für die Tertiäreinspritzung ist.

2. Gerät zur Herstellung eines spritzgegossenen Gegenstandes (1) gemäß Anspruch 1, wobei
die erste Form (6), die zweite Form (7) und die dritte Form (8) in Abständen von 120° entlang der Drehrichtung des Drehtisches (5) angeordnet sind, und
die erste Drehposition und die zweite Drehposition einen Winkel von 120° in Bezug auf ein Drehzentrum (C) des Drehtellers (5) bilden.

3. Gerät zur Herstellung eines spritzgegossenen Gegenstandes (1) gemäß Anspruch 1 oder 2, wobei
die vierte Form (9), die fünfte Form (10) und die sechste Form (11) von der Steuerung (16) so gesteuert werden, dass sie das Öffnen der Form und das Schließen der Form getrennt voneinander durchführen.

4. Verfahren zur Herstellung eines spritzgegossenen Gegenstandes (1), bei dem die folgenden Einspritzungen durchgeführt werden:
eine Primäreinspritzung, bei der ein Harz in Formen eingespritzt wird, um ein erstes Element (32) und ein zweites Element (33) zu formen;
eine Sekundäreinspritzung, bei der die Formen des ersten Elements (32) und des zweiten Elements (33), die durch die Primäreinspritzung geformt wurden, in die gleiche Einspritzungsposition bewegt und geschlossen werden, und das Harz in die Formen eingespritzt wird, um das erste Element (32) und das zweite Element (33) zu integrieren; und
eine Tertiäreinspritzung, bei der das Harz in die Formen eingespritzt wird, in denen die Sekundäreinspritzung durchgeführt wird, und das Harz auf eine äußere Umfangsfläche mindestens einen des ersten Elements (32) und des zweiten Elements (33), die in den Formen aufgenommen sind, gespritzt wird;
wobei ein Gerät zur Herstellung des spritzgegossenen Gegenstandes (1) vorbereitet wird, das umfasst:
einen Drehtisch (5), konfiguriert, um eine hin- und hergehende Drehbewegung ausführen;
eine erste Form (6), eine zweite Form (7) und eine dritte Form (8), die auf dem Drehtisch (5) in vorgegebenen Abständen entlang der Drehrichtung des Drehtisches (5) angeordnet sind;
eine vierte Form (9), eine fünfte Form (10) und eine sechste Form (11) zum Öffnen und Schließen der ersten Form (6), der zweiten Form (7) und der dritten Form (8);
eine erste Einspritzungsvorrichtung (12), eine zweite Einspritzungsvorrichtung (13) und eine dritte Einspritzungsvorrichtung (14) zum Einspritzen des Harzes in die geschlossenen Formen; und
eine Steuerung (16), die so konfiguriert ist, dass sie eine erste Positionssteuerung und eine zweite Positionssteuerung an dem Drehtisch (5) durchführt und eine erste Einspritzsteuerung und eine zweite Einspritzsteuerung an der ersten Einspritzvorrichtung (12), der zweiten Einspritzvorrichtung (13) und der
dritten Einspritzvorrichtung (14) durchführt;
wenn die Steuerung (16) so konfiguriert ist, dass sie die erste Positionssteuerung durchführt, der Drehtisch (5) sich in eine erste Drehposition dreht, in der die erste Form (6) und die vierte Form (9) einander zugewandt sind, die zweite Form (7) und die fünfte Form (10) einander zugewandt sind, und die dritte Form (8) und die sechste Form (11) einander zugewandt sind;
wenn die Steuerung (16) so konfiguriert ist, dass sie die zweite Positionssteuerung durchführt, der Drehtisch (5) sich in eine zweite Drehposition dreht, in der die erste Form (6) und die sechste Form (11) einander zugewandt sind, die zweite Form (7) und die vierte Form (9) einander zugewandt sind, und die dritte Form (8) und die fünfte Form (10) einander zugewandt sind;
wobei
wenn die Steuerung (16) so konfiguriert ist, dass sie die erste Einspritzungssteuerung gefolgt von der ersten Positionssteuerung durchführt, die Primäreinspritzung von der ersten Einspritzungsvorrichtung (12) durchgeführt wird, das erste Element (32) in der ersten Form (6) und der vierten Form (9) geformt wird, die Sekundäreinspritzung und die Tertiäreinspritzung von der zweiten Einspritzungsvorrichtung (13) durchgeführt werden, das erste Element (32) und das zweite Element (33) in der zweiten Form (7) und der fünften Form (10) integriert werden, das Harz dem äußeren Umfangsabschnitt wenigstens einen des ersten Elements (32) und des zweiten Elements (33), die integriert sind, zugeführt wird, die Primäreinspritzung von der dritten Einspritzungsvorrichtung (14) durchgeführt wird und das zweite Element (33) in der dritten Form (8) und der sechsten Form (11) geformt wird;
wenn die Steuerung (16) so konfiguriert ist, dass sie die zweite Einspritzsteuerung gefolgt von der zweiten Positionssteuerung durchführt, die Sekundäreinspritzung und die Tertiäreinspritzung von der dritten Einspritzvorrichtung (14) durchgeführt werden, das erste Element (32) und das zweite Element (33) in der ersten Form (6) und der sechsten Form (11) integriert werden, das Harz auf den äußeren Umfangsabschnitt mindestens einem des ersten Elements (32) und des zweiten Elements (33), die integriert sind, gespritzt wird, die Primäreinspritzung durch die erste Einspritzungsvorrichtung (12) durchgeführt wird, das erste Element (32) in der zweiten Form (7) und der vierten Form (9) geformt wird, die Primäreinspritzung durch die zweite Einspritzungsvorrichtung (13) durchgeführt wird, und das zweite Element (33) in der dritten Form (8) und der fünften Form (10) geformt wird; und
die zweite Einspritzungsvorrichtung (13) und die dritte Einspritzungsvorrichtung (14) jeweils zwei Einspritzanschlüsse (13b, 13d, 14b, 14d) enthalten, und in der zweiten Einspritzvorrichtung (13) und der dritten Einspritzvorrichtung (14) das Harz von einem Einspritzanschluss (13b, 14b) der zwei Einspritzanschlüsse (13b, 13d, 14b, 14d) eingespritzt wird, um das Formen des ersten Elements (32) und des zweiten Elements (33) oder das Formen zum Integrieren des ersten Elements (32) und des zweiten Elements (33) während der Primäreinspritzung und der Sekundäreinspritzung durchzuführen, und das Harz von dem anderen Einspritzanschluss (13d, 14d) der zwei Einspritzanschlüsse (13b, 13d, 14b, 14d) entlang des äußeren Umfangsabschnitts von entweder dem ersten Element (32) oder dem zweiten Element (33) während der Tertiäreinspritzung eingespritzt wird.

5. Verfahren zur Herstellung eines spritzgegossenen Gegenstandes (1) gemäß Anspruch 4, wobei
die erste Form (6), die zweite Form (7) und die dritte Form (8) in Abständen von 120° entlang der Drehrichtung des Drehtisches (5) angeordnet sind, und
die erste Drehposition und die zweite Drehposition einen Winkel von 120° in Bezug auf ein Drehzentrum (C) des Drehtellers (5) bilden.

6. Verfahren zur Herstellung eines spritzgegossenen Gegenstandes (1) gemäß Anspruch 4 oder 5, wobei
nach dem Öffnen der Formen nach Beendigung der Tertiäreinspritzung jeweils in der ersten Drehposition und der zweiten Drehposition, ein fertiges Produkt des spritzgegossenen Gegenstandes aus dem Inneren der Formen in jeder der ersten Drehposition und der zweiten Drehposition entfernt wird.

7. Verfahren zur Herstellung eines spritzgegossenen Gegenstandes (1) gemäß irgendeinem der Ansprüche 4 bis 6, wobei
das Schließen der Form und das Öffnen der Form jeder der vierten Form (9), der fünften Form (10) und der sechsten Form (11) in jeder der ersten Drehposition und der zweiten Drehposition jeweilig und getrennt durchgeführt werden.

## Revendications

1. Un appareil pour fabriquer un article (1) moulé par injection configuré pour effectuer :
une injection primaire dans laquelle une résine est injectée dans des moules pour mouler un premier élément (32) et un deuxième élément (33) ;
une injection secondaire dans laquelle les moules du premier élément (32) et du deuxième élément (33) moulés par l'injection primaire sont déplacés vers la même position d'injection et sont serrés, et la résine est injectée dans les moules pour intégrer le premier élément (32) et le deuxième élément (33) ; et
une injection tertiaire dans laquelle la résine est injectée dans les moules où l'injection secondaire est effectuée, et la résine est injectée sur une surface périphérique externe d'au moins l'un parmi le premier élément (32) et le deuxième élément (33) logés dans le moules ;
l'appareil pour fabriquer un article (1) moulé par injection comprenant :
un plateau tournant (5) configuré pour effectuer une rotation alternative ;
un premier moule (6), un deuxième moule (7) et un troisième moule (8) disposés sur le plateau tournant (5) à des intervalles prédéterminés le long de la direction de rotation du plateau tournant (5) ;
un quatrième moule (9), un cinquième moule (10) et un sixième moule (11) pour ouvrir et serrer le premier moule (6), le deuxième moule (7) et le troisième moule (8) ;
un premier dispositif d'injection (12), un deuxième dispositif d'injection (13) et un troisième dispositif d'injection (14) pour injecter la résine dans les moules serrés ; et
un contrôleur (16), configuré pour exécuter une première commande de position et une deuxième commande de position sur le plateau tournant (5), et exécuter une première commande d'injection et une deuxième commande d'injection sur le premier dispositif d'injection (12), le deuxième dispositif d'injection (13), et le troisième dispositif d'injection (14) ;
lorsque le contrôleur (16) est configuré pour exécuter la première commande de position, le plateau tournant (5) tourne vers une première position de rotation dans laquelle le premier moule (6) et le quatrième moule (9) sont en face l'un de l'autre, le deuxième moule (7) et le cinquième moule (10) sont en face l'un de l'autre, et le troisième moule (8) et le sixième moule (11) sont en face l'un de l'autre ;
lorsque le contrôleur (16) est configuré pour exécuter la deuxième commande de position, le plateau tournant (5) tourne vers une deuxième position de rotation dans laquelle le premier moule (6) et le sixième moule (11) sont en face l'un de l'autre, le deuxième moule (7) et le quatrième moule (9) sont en face l'un de l'autre, et le troisième moule (8) et le cinquième moule (10) sont en face l'un de l'autre ;
lorsque le contrôleur (16) est configuré pour effectuer la première commande d'injection suivie de la première commande de position, l'injection primaire est réalisée par le premier dispositif d'injection (12), le premier élément (32) est moulé dans le premier moule (6) et le quatrième moule (9), l'injection secondaire et l'injection tertiaire sont réalisées par le deuxième dispositif d'injection (13), le premier élément (32) et le deuxième élément (33) sont intégrés dans le deuxième moule (7) et le cinquième moule (10), la résine est amenée à la partie périphérique externe d'au moins l'un parmi le premier élément (32) et le deuxième élément (33) qui sont intégrés, l'injection primaire est réalisée par le troisième dispositif d'injection (14), et le deuxième élément (33) est moulé dans le troisième moule (8) et le sixième moule (11) ;
lorsque le contrôleur (16) est configuré pour effectuer la deuxième commande d'injection suivie de la deuxième commande de position, l'injection secondaire et l'injection tertiaire sont effectuées par le troisième dispositif d'injection (14), le premier élément (32) et le deuxième élément (33) sont intégrés dans le premier moule (6) et le sixième moule (11), la résine est injectée sur la surface périphérique externe d'au moins l'un parmi le premier élément (32) et le deuxième élément (33) qui sont intégrés, l'injection primaire est réalisée par le premier dispositif d'injection (12), le premier élément (32) est moulé dans le deuxième moule (7) et le quatrième moule (9), l'injection primaire est réalisée par le deuxième dispositif d'injection (13), et le deuxième élément (33) est moulé dans le troisième moule (8) et le cinquième moule (10) ; et
le deuxième dispositif d'injection (13) et le troisième dispositif d'injection (14) comprennent chacun deux ports d'injection (13b, 13d, 14b, 14d),
l'un des deux ports d'injection (13b, 13d, 14b, 14d) est un port d'injection (13b, 14b) pour l'injection primaire et l'injection secondaire, et l'autre des deux ports d'injection (13b, 13d, 14b, 14d) est un port d'injection (13d, 14d) pour l'injection tertiaire.

2. L'appareil pour fabriquer un article (1) moulé par injection selon la revendication 1, dans lequel
le premier moule (6), le deuxième moule (7) et le troisième moule (8) sont disposés à des intervalles de 120° le long de la direction de rotation du plateau tournant (5), et
la première position de rotation et la deuxième position de rotation forment un angle de 120° par rapport à un centre de rotation (C) du plateau tournant (5).

3. L'appareil pour fabriquer un article (1) moulé par injection selon la revendication 1 ou la revendication 2, dans lequel
le quatrième moule (9), le cinquième moule (10) et le sixième moule (11) sont commandés par le contrôleur (16) de façon à effectuer l'ouverture du moule et le serrage du moule séparément l'un de l'autre.

4. Un procédé de fabrication d'un article (1) moulé par injection, dans lequel les injections suivantes sont effectuées :
une injection primaire dans laquelle une résine est injectée dans des moules pour mouler un premier élément (32) et un deuxième élément (33) ;
une injection secondaire dans laquelle les moules du premier élément (32) et du deuxième élément (33) moulés par l'injection primaire sont déplacés vers la même position d'injection et sont serrés, et la résine est injectée dans les moules pour intégrer le premier élément (32) et le deuxième élément (33) ; et
une injection tertiaire dans laquelle la résine est injectée dans les moules où l'injection secondaire est effectuée, et la résine est injectée sur une surface périphérique externe d'au moins l'un parmi le premier élément (32) et le deuxième élément (33) logés dans les moules ;
un appareil pour fabriquer l'article (1) moulé par injection est préparé, qui comprend :
un plateau tournant (5) configuré pour effectuer une rotation alternative ;
un premier moule (6), un deuxième moule (7) et un troisième moule (8) disposés sur le plateau tournant (5) à des intervalles prédéterminés le long de la direction de rotation du plateau tournant (5) ;
un quatrième moule (9), un cinquième moule (10) et un sixième moule (11) pour ouvrir et serrer le premier moule (6), le deuxième moule (7) et le troisième moule (8) ;
un premier dispositif d'injection (12), un deuxième dispositif d'injection (13) et un troisième dispositif d'injection (14) pour injecter la résine dans les moules serrés ; et
un contrôleur (16), configuré pour exécuter une première commande de position et une deuxième commande de position sur le plateau tournant (5), et exécuter une première commande d'injection et une deuxième commande d'injection sur le premier dispositif d'injection (12), le deuxième dispositif d'injection (13), et le troisième dispositif d'injection (14) ;
lorsque le contrôleur (16) est configuré pour exécuter la première commande de position, le plateau tournant tourne vers une première position de rotation dans laquelle le premier moule (6) et le quatrième moule (9) sont en face l'un de l'autre, le deuxième moule (7) et le cinquième moule (10) sont en face l'un de l'autre, et le troisième moule (8) et le sixième moule (11) sont en face l'un de l'autre ;
lorsque le contrôleur (16) est configuré pour exécuter la deuxième commande de position, le plateau tournant (5) tourne vers une deuxième position de rotation dans laquelle le premier moule (6) et le sixième moule (11) sont en face l'un de l'autre, le deuxième moule (7) et le quatrième moule (9) sont en face l'un de l'autre, et le troisième moule (8) et le cinquième moule (10) sont en face l'un de l'autre ;
lorsque le contrôleur (16) est configuré pour effectuer la première commande d'injection suivie de la première commande de position, l'injection primaire est réalisée par le premier dispositif d'injection (12), le premier élément (32) est moulé dans le premier moule (6) et le quatrième moule (9), l'injection secondaire et l'injection tertiaire sont réalisées par le deuxième dispositif d'injection (13), le premier élément (32) et le deuxième élément (33) sont intégrés dans le deuxième moule (7) et le cinquième moule (10), la résine est amenée à la partie périphérique externe d'au moins l'un parmi le premier élément (32) et le deuxième élément (33) qui sont intégrés, l'injection primaire est réalisée par le troisième dispositif d'injection (14), et le deuxième élément (33) est moulé dans le troisième moule (8) et le sixième moule (11) ;
lorsque le contrôleur (16) est configuré pour effectuer la deuxième commande d'injection suivie de la deuxième commande de position, l'injection secondaire et l'injection tertiaire sont effectuées par le troisième dispositif d'injection (14), le premier élément (32) et le deuxième élément (33) sont intégrés dans le premier moule (6) et le sixième moule (11), la résine est injectée sur la partie périphérique externe d'au moins l'un parmi le premier élément (32) et le deuxième élément (33) qui sont intégrés, l'injection primaire est réalisée par le premier dispositif d'injection (12), le premier élément (32) est moulé dans le deuxième moule (7) et le quatrième moule (9), l'injection primaire est réalisée par le deuxième dispositif d'injection (13), et le deuxième élément (33) est moulé dans le troisième moule (8) et le cinquième moule (10) ; et
le deuxième dispositif d'injection (13) et le troisième dispositif d'injection (14) comprennent chacun deux orifices d'injection (13b, 13d, 14b, 14d), et dans le deuxième dispositif d'injection (13) et le troisième dispositif d'injection (14), la résine est injecté à partir d'un orifice d'injection (13b, 14b) des deux orifices d'injection (13b, 13d, 14b, 14d) pour effectuer le moulage du premier élément (32) et du deuxième élément (33) ou le moulage pour intégrer le premier élément (32) et le deuxième élément (33) pendant l'injection primaire et l'injection secondaire, et la résine est injectée depuis l'autre orifice d'injection (13d, 14d) des deux orifices d'injection (13b, 13d, 14b, 14d) le long de la partie périphérique externe de l'un ou l'autre parmi le premier élément (32) et le deuxième élément (33) pendant l'injection tertiaire.

5. Le procédé de fabrication d'un article (1) moulé par injection selon la revendication 4, dans lequel
le premier moule (6), le deuxième moule (7) et le troisième moule (8) sont disposés à des intervalles de 120° le long de la direction de rotation du plateau tournant (5), et
la première position de rotation et la deuxième position de rotation forment un angle de 120° par rapport à un centre de rotation (C) du plateau tournant (5).

6. Le procédé de fabrication d'un article (1) moulé par injection selon la revendication 4 ou 5, dans lequel
après que les moules ont été ouverts à la fin de l'injection tertiaire dans chacune de la première position de rotation et de la deuxième position de rotation, un produit fini de l'article moulé par injection est retiré de l'intérieur des moules dans chaque position parmi la première position de rotation et la deuxième position de rotation.

7. Le procédé de fabrication d'un article (1) moulé par injection selon l'une quelconque des revendications 4 à 6, dans lequel
le serrage du moule et l'ouverture du moule de chacun parmi le quatrième moule (9), le cinquième moule (10) et le sixième moule (11) dans chacune parmi la première position de rotation et la deuxième position de rotation sont effectués respectivement et séparément.
